# FASCICULE DE BREVET EUROPEEN

(11) **EP 1 678 550 B1**
(45) Date de publication et mention de la délivrance du brevet: **13.09.2017**
(21) Numéro de dépôt: 04791518.6
(22) Date de dépôt: 13.10.2004
(51) Int. Cl.: G02C 13/00

(54) **MESURE DE CONFIGURATION DU VISAGE ET DE MONTURES DE LUNETTES PLACEES SUR CE VISAGE A UNE EFFICACITE AMELIOREE**
VERFAHREN ZUR MESSUNG DER GESICHTSKONFIGURATION UND KONFIGURATION VON AUF DEM GESICHT PLAZIERTEN BRILLENRAHMEN MIT VERBESSERTER EFFEKTIVITÄT
METHOD OF MEASURING FACIAL CONFIGURATION AND CONFIGURATION OF SPECTACLE FRAMES PLACED ON SAID FACE, WITH IMPROVED EFFECTIVENESS

(30) Priorité: 13.10.2003 FR 0311932
(43) Date de publication de la demande: 12.07.2006
(73) Titulaire: INTERACTIF VISUEL SYSTEME (I V S), 92110 Clichy (FR)
(72) Inventeur: THOMET, Pascal, F-75015 Paris (FR)
(74) Mandataire: Regimbeau
(86) Numéro de dépôt international: PCT/FR2004/002605
(87) Numéro de publication internationale: WO 2005/038511

(56) Documents cités:
- EP-A- 0 680 722
- WO-A1-03/081536
- DE-A- 10 007 705
- FR-A- 2 620 927
- FR-A- 2 688 679
- KR-A- 20010 008 011
- US-A- 4 991 005
- US-A1- 2002 082 800
- US-A1- 2003 090 625
- US-A1- 2003 123 026
- US-B1- 6 286 957

## Description

Mesure de configuration du visage et de montures de lunettes placées sur ce visage à une efficacité améliorée.

L'invention concerne la réalisation de lunettes de vue, et notamment les mesures relatives au positionnement des verres correctifs sur la monture choisie.

De manière connue, la réalisation d'une paire de lunettes correctrices nécessite la prise de mesures physionomiques en tenant compte de la configuration des lunettes sur le visage du porteur, afin de fournir la correction effectivement souhaitée et ce en tenant compte de la position réservée aux verres sur le visage du porteur.

Il s'agit, en d'autres termes, d'adapter le verre sur la monture choisie.

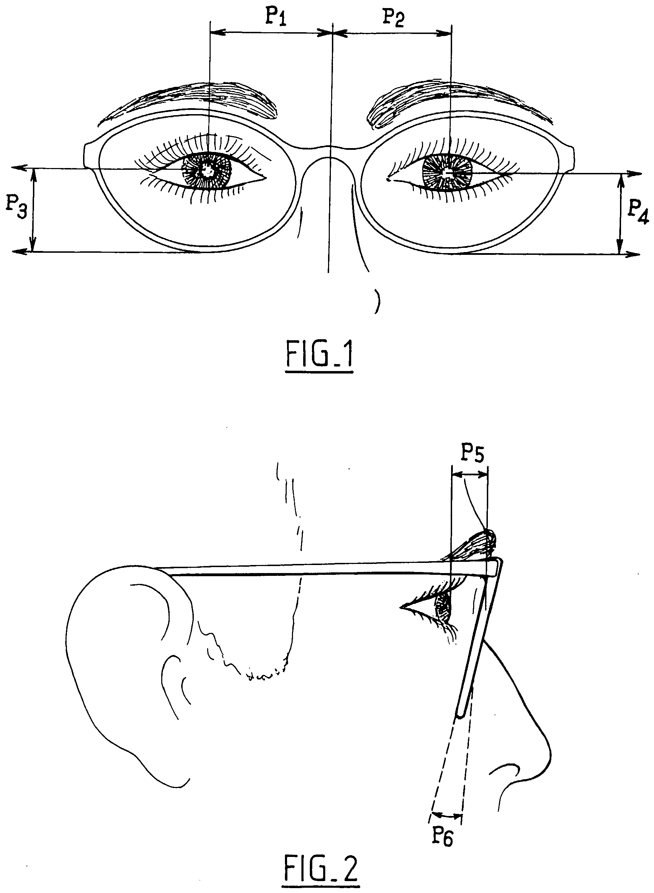

Ces mesures illustrées sur les figures 1 et 2 sont principalement celles des paramètres suivants :
- les écarts pupillaires, référencés P₁ et P₂ sur les figures, distance entre la ligne nasale et les pupilles mesurée sur une vue de face du visage ;
- les hauteurs, référencées P₃ et P₄ sur la figure 1, distance entre le point le plus bas de la monture et la pupille mesurée également sur une vue de face du visage ; Dans toute la suite de ce document, et pour tenir compte de la définition précise de la hauteur, le point le plus bas de la monture (ou) sa limite inférieure) sera réputé faire référence au point le plus bas du drageoir de la monture - dans le cas où la monture comporte un drageoir - (le drageoir est le profil dans lequel vient s'insérer le verre optique correcteur).
- la distance verre-oeil, référencée P₅, mesurée sur une vue de côté du visage ;
- l'angle d'inclinaison pantoscopique de la monture, référencé P₆, mesuré également sur une vue de côté.

La précision nécessaire sur ces valeurs est typiquement de l'ordre de 5/10^{ème} de millimètres, pour les mesures P₁ à P₅, et de 1° pour la valeur P₆.

La mesure de ces paramètres nécessite d'apporter un soin tout particulier au positionnement du visage du porteur si on veut éviter des erreurs de mesure.

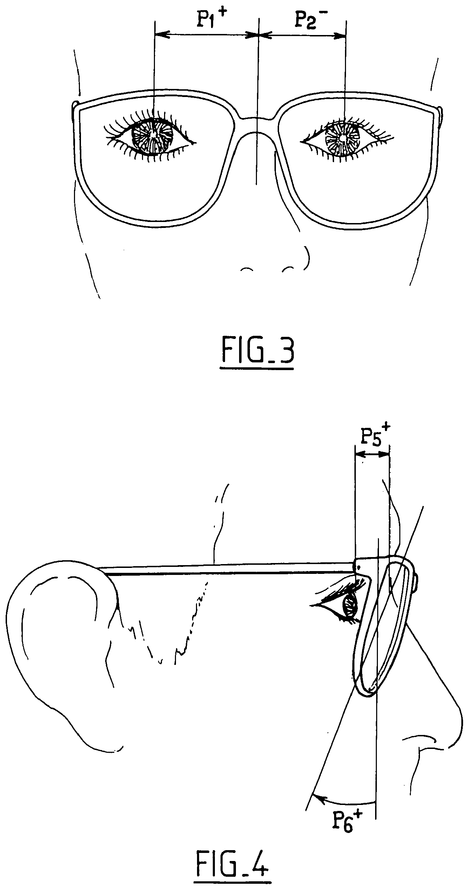

Les figures 3 et 4 montrent des exemples de positionnement incorrect du visage du porteur. La mesure des écarts et des hauteurs pupillaires s'en trouve nettement déformée.

Ainsi, sur la figure 3 le porteur présente son visage selon un léger écart en rotation, rotation du visage autour d'un axe vertical.

Le visage est ici tourné d'environ 7 degrés. Cette rotation s'avère provoquer une rotation du globe oculaire de chaque oeil d'environ la même valeur. Or, compte-tenu du rayon du globe oculaire, la pupille s'en trouve sur le côté par rapport au nez selon un décalage de chaque pupille d'environ 1.5 mm.

La réalisation des lunettes s'en trouve nettement dégradée.

La figure 4 correspond à un positionnement incorrect du visage du porteur, selon une même rotation de la tête, là encore.

Cette vue, cette fois de côté, illustre l'effet néfaste de cette rotation sur la mesure de la distance verre-oeil et de l'angle pantoscopique.

En effet, un écart, bien que de quelques degrés, rend la ligne d'inclinaison moyenne de la monture plus difficile à définir, du fait que le verre s'étend transversalement à l'image.

La distance verre-oeil est également beaucoup plus difficile à estimer, car mesurée à partir d'un point aléatoire sur le verre.

Il est donc important de prendre une prise de vue où la monture soit vue le plus possible par la tranche pour éviter ce type d'approximation néfaste à la qualité des lunettes réalisées.

Pour l'opticien, la réalisation d'une ou plusieurs prises de vue où le client a un positionnement correct est une action difficile, car il doit souvent manipuler la tête du client pour le positionner correctement : en effet, lorsqu'on donne des instructions orales au patient - par exemple de tourner la tête à droite - on observe que le patient réalise des mouvements beaucoup trop amples et trop brusques.

Des systèmes existent, certes pour permettre de mieux assurer que la position est correcte au moment de la prise de vue:
Certains systèmes reposent sur l'adjonction à la monture d'un dispositif muni de repères visuels permettant de s'assurer que la monture est bien symétrique (ce dispositif se fixe sur la monture, et comporte le plus souvent des repères qu'il faut aligner pour s'assurer de la symétrie de la monture).

D'autres systèmes demandent à l'opticien de réaliser plusieurs prises de vues séparées afin de sélectionner, parmi ces prises de vue, celle où le positionnement est le plus correct. Toutefois, la multiplication des positionnements du visage ne permet pas toujours d'atteindre la position souhaitée, et ce notamment quand le porteur est, pour une raison ou une autre, difficile à positionner. La demande de brevet KR 20010008011A décrit un procédé de détermination de paramètres physionomiques d'une personne, où un appareil de prises de vue est déplacé en fonctionnement par rapport au visage fixe de la personne, notamment en rotation autour d'un axe vertical pour fournir des prises de vue du visage sous divers angles. Dans ce document, une pluralité de prises de vue du visage est obtenue séparément d'une pluralité de prises de vue d'une monture, puis ces deux séries de prises de vue sont mises en correspondance.

Enfin certains systèmes proposent une combinaison des deux techniques précédemment décrites.

Ainsi, aucun de ces systèmes ne corrige la problématique exposée ci-dessus : il est à chaque fois nécessaire de demander au client de bouger la tête avant la prise de vue, et si, après la prise de vue, on s'aperçoit que le client est mal positionné, il est nécessaire de recommencer l'opération.

Il a aussi été proposé, comme dans la demande de brevet WO 03/081536, de réaliser plusieurs prises de vue du visage d'une personne, afin de réaliser une vue tridimensionnelle dudit visage, puis de détecter des paramètres physionomiques à l'aide de points de référence placés sur cette vue tridimensionnelle. Cependant, un tel procédé induit une complexité bien supérieure à la simple sélection d'une prise de vue jugée adaptée pour déterminer des paramètres physionomiques du visage d'une personne.

Le but de l'invention est de faciliter et de rendre efficace la phase de réalisation d'une prise de vue idéale sur le porteur de la monture.

Ce but est atteint selon l'invention grâce à un procédé de mesure d'au moins un paramètre physionomique sur le visage d'un porteur d'une paire de lunettes pour le montage adéquat de verres optiques sur cette monture, dans lequel procédé on réalise une série de prises de vue du visage du porteur de lunettes dans différentes positions et on sélectionne, parmi ces prises de vue, celle la mieux orientée pour une mesure la plus fiable du paramètre physionomique considéré, caractérisé en ce que l'on réalise cette série de prises de vue en cours de déplacement relatif entre le visage du porteur et l'appareil de prise de vue afin de générer la prise de vue la plus fiable en correspondance d'une position franchie en cours de mouvement.

On propose également selon l'invention un dispositif de mesure d'au moins un paramètre physionomique sur le visage d'un porteur d'une paire de lunettes pour le montage adéquat de verres optiques sur cette monture, comprenant des moyens pour réaliser une série de prise de vue sur le visage du porteur en des positions différentes dont un appareil de prise de vue à cet effet, et des moyens pour permettre de sélectionner, parmi ces prises de vue, celle la mieux orientée pour la mesure du paramètre physionomique, caractérisé en ce que les moyens de prise de vue sont prévus pour réaliser la série de prise de vues en cours de mouvement relatif entre le visage et l'appareil de prise de vue, et générer ainsi la prise de vue la plus fiable en tant que position franchie en mouvement.

D'autres caractéristiques, buts et avantages de l'invention apparaîtront à la lecture de la description détaillée qui va suivre, faite en référence aux figures annexées sur lesquelles :
- les figures 1 et 2 illustrent les mesures optiques réalisées habituellement avant la mise en place des verres correcteurs sur une monture ;
- les figures 3 et 4 illustrent une orientation incorrect du visage du porteur en rotation latérale de la tête, et son effet sur la mesure ;
- les figures 5a à 5c illustrent une séquence de prises de vue mise en oeuvre dans le cadre de l'invention ;

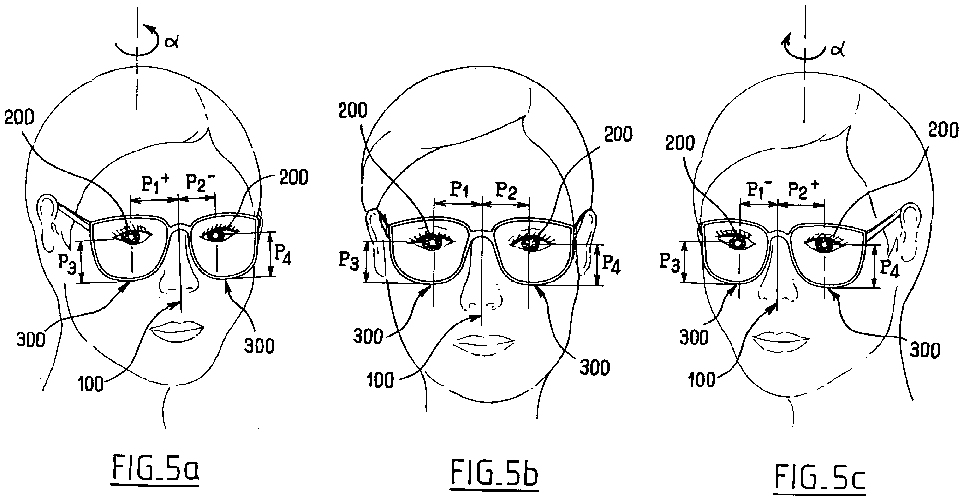

Le mouvement de tête est, sur ces figures 5a à 5c, un balayage à rotation autour d'un axe vertical.

La figure 5b est une position de face, position dans laquelle la direction du regard et la direction du visage sont alignées. La monture est également orientée dans la même direction.

Les écarts pupillaires droit et gauche P₁ et P₂ peuvent alors être mesurés, et, selon le degré de symétrie du visage et du regard en présence, on s'approche d'une égalité des deux écarts gauche et droit.

Comme on l'a précédemment proposé, pour les mesures de paramètres réalisés en vue de face, le paramètre susceptible d'être mesuré varie selon les positions du visage.

Sur les figures 5a à 5c, l'écart pupillaire, c'est à dire la distance mesurée entre l'axe nasal 100 et le point central de la pupille 200 pour un oeil donné, est différent, dans le sens de croissant ou décroissant selon que le visage est tourné vers la gauche ou la droite.

Ainsi, sur la figure 5a, l'écart pupillaire droit P₁ a une valeur légèrement augmentée tandis que l'écart pupillaire gauche P₂⁻ présente une valeur réduite.

Ainsi l'écart pupillaire gauche s'accroît régulièrement au cours du mouvement du visage vers la droite. L'écart droit, quant à lui, décroît naturellement au cours du mouvement.

Outre cette variation d'écart pupillaire, la hauteur P₃, P₄, mesurée entre la limite inférieure 300 de la monture et le point pupillaire 200, tend également à varier en correspondance à la forme de la limite inférieure de la monture, au cours du mouvement de gauche à droite du visage.

On propose ici une approche par la réalisation de telles prises de vues successives qui permettent d'assurer l'existence d'une prise de vue adéquate telle que celle de la figure 5b.

Les moyens proposés ici consistent en un appareillage pour enregistrer un tel mouvement du visage de l'utilisateur sous la forme d'une séquence vidéo, c'est à dire d'une série d'images prélevées au cours du mouvement.

Le porteur fait donc l'objet d'un grand nombre de prélèvements d'images successives, sans pour autant marquer un arrêt à chaque prélèvement.

Ce prélèvement au cours du mouvement de tête génère une série de prises de vue du visage, laquelle série présente un avantage pour la mesure des paramètres optiques car elle inclut une vue idéale pour la mesure, qu'il suffit d'extraire dans une seconde étape.

En d'autres termes, et comme représenté sur les trois prises de vues représentées aux figures 5a à 5c, prises au cours de ce mouvement, la tête de l'utilisateur décrit un angle de rotation qui encadre l'orientation α qui encadre de part et d'autre l'orientation idéale du visage.

La position, idéale est donc élaborée sans intervention spécifique du porteur, ni même de l'opticien puisque générée par le système d'enregistrement.

Non seulement on demande au porteur de décrire ce mouvement de tête, mais il lui est également demandé d'observer un point fixe placé face à lui. Ainsi, le regard reste, lui, stable sur cet objet observé.

La mesure d'écart pupillaire réalisée sur la vue sélectionnée au final, c'est à dire la vue 5b, s'avère nettement plus appropriée qu'une mesure réalisée sur une posture décalée telle que celles des figures 5a et 5c.

On notera en outre que cette position idéale de la figure 5b est aisément sélectionnée par l'opticien, puisqu'elle correspond sensiblement à un alignement des branches de la monture face à la caméra, et à une po position où les tempes sont vues symétriquement à travers les verres de la monture.

Dans une variante simple, l'identification de la position optimale est donc réalisée par l'opticien lui-même. Pour cela, le système inclut des moyens de visionnage de la séquence animée, et des moyens de défilement des différentes images constituant cette séquence, sous le contrôle de l'opticien, autorisant ce dernier à arrêter le défilement sur l'image choisie.

De tels moyens sont par exemple constitués par un processeur affichant sur l'écran de visionnage la séquence d'images et affichant également un curseur de contrôle défilant en correspondance avec la durée de séquence déjà écoulée.

Par l'utilisation d'un tel curseur de contrôle, l'utilisateur déclenche non seulement un défilement progressif, mais opère des retours en arrière, et même place le curseur à un degré d'avancement choisi, susceptible de correspondre à l'image idéale.

Un tel système permet ici d'exploiter un balayage unique, par exemple de gauche à droite du porteur. Toutefois, un mouvement de tête répétitif, c'est à dire plusieurs balayages de tête successifs est également exploitable par le système, le meilleur de ces balayages étant alors celui utilisé pour la mesure.

Pour faciliter et fiabiliser l'identification de la position de tête idéale, il est prévu en variante d'équiper la monture de moyens formant indicateurs géométriques spécifiquement choisis pour mettre en valeur l'orientation de la monture.

Ainsi, de tels moyens peuvent être constitués d'un support longiligne portant une série de repères visuels, placés le long des branches de montures et/ou sur le montant supérieur de face de la monture.

Une fois l'image idéale choisie, l'opticien affiche cette dernière à l'écran et procède aux mesures souhaitées, par exemple en positionnant lui-même sur l'écran des repères correspondant à la position de la pupille, et à la position de la monture, et/ou de l'axe nasal.

En variante, le système comporte des moyens de reconnaissance de formes, qui sont aptes, par eux-mêmes, à identifier la position géométrique exacte de ces différents éléments nécessaires à la mesure.

De tels moyens de reconnaissance de forme réalisent donc, par eux mêmes, les mesures physionomiques souhaitées.

Afin de rendre encore plus efficace l'identification automatique de la position des pupilles, que ce soit au bénéfice d'une mesure automatique ou pour l'usage de l'opticien, le système est avantageusement doté de moyens d'éclairage positionnés dans le but spécifique de générer un reflet cornéen à l'intérieur des pupilles, qui forme alors mises en évidence de la position de celles-ci.

La démarche qui est exposée ci-avant en rapport à la mesure de l'écart pupillaire P₁, P₂ et de la hauteur pupillaire P₃, P₄, est également appliquée à la mesure de la distance verre/oeil P₅ et de l'angle pantoscopique. P₆

Pour cela, la séquence de mouvement du visage qui est enregistrée est, cette fois, réalisée avec une caméra qui est placée sur le côté du visage de l'utilisateur. La prise de vue idéale est celle où le plan de la monture se trouve dans l'alignement de l'axe optique de cette caméra.

La sélection manuelle ou automatique des images consiste ensuite à éliminer les images de la séquence où le plan principal de la monture est oblique dans le champ de la caméra.

Pour l'enregistrement de la séquence animée spécifiquement dédiée à la mesure de la distance verre/oeil P₅ et de l'angle pantoscopique P₆, on privilégiera un enregistrement réalisé à un autre moment que celui précédemment effectué pour l'écart pupillaire (enregistrement de face) : on privilégiera un enregistrement dans lequel le plan de la monture se trouve dans l'alignement de l'axe optique de la caméra. De plus, pour une mesure efficace de la distance verre/oeil, il est préférable que le regard du porteur soit porté directement devant lui, c'est à dire qu'il regarde un objet directement devant lui, à sa hauteur.

Dans une variante de l'invention, ce point de référence est positionné à la hauteur des yeux, ici par des moyens motorisés et sans la commande de moyens d'identification automatique de la hauteur des yeux.

L'enregistrement de la séquence animée en vue de côté peut avantageusement être réalisé et avec la même caméra, en demandant au porteur de pivoter le visage de manière correspondante.

Au cours de l'enregistrement de cette séquence en vue latérale, comme pour celle effectuée de face, la caméra est positionnée idéalement à la hauteur des yeux. Son positionnement en hauteur est pour cela effectué par déplacement manuel, ou par un dispositif motorisé apte par exemple à identifier la hauteur des yeux et à positionner la caméra par lui-même. Un positionnement automatique de la caméra ou de la référence visuelle est par exemple piloté par un moyen tirant profit du reflet cornéen.

La caméra est avantageusement cachée vis à vis du porteur.

Pour cela, une technique consiste à positionner un miroir face au visage du porteur, la caméra étant placée derrière ce miroir. On adopte pour cela un miroir sans teint ou un miroir comportant un orifice ménagé spécifiquement pour y positionner l'objectif de la caméra.

Selon une disposition avantageuse, le dispositif décrit ci-avant comporte des moyens pour identifier l'échelle entre chaque image enregistrée et la taille réelle du visage du porteur. Ces moyens peuvent inclure un dispositif pour équiper une monture, muni d'une série de repères visuels positionnés pour permettre le calcul d'une échelle de l'image par rapport à la taille réelle du visage du porteur.

On notera que les moyens ici proposés, outre l'efficacité des mesures, apportent une plus grande aisance de travail à l'opticien et rendent les opérations plus confortables pour le client, ce dernier n'ayant pas à prendre de pose spécifique, ni à déployer une concentration particulière.

## Revendications

1. Procédé de mesure d'au moins un paramètre physionomique (P₁,...,P₆), parmi les deux écarts pupillaires gauche (P₂) et droit (P₁), les deux hauteurs verticales entre le point le plus bas de la monture et la pupille à gauche (P₄) et à droite (P₃), la distance verre-oeil (P₅), et l'angle pantoscopique (P₆) sur le visage d'un porteur d'une monture d'une paire de lunettes pour le montage adéquat de verres optiques sur cette monture,
dans lequel procédé on réalise une série de prises de vue du visage du porteur de lunettes portant la monture dans différentes positions et on sélectionne, parmi ces prises de vue, celle la mieux orientée pour une mesure la plus fiable du paramètre physionomique considéré (P₁,...,P₆), **caractérisé en ce que** l'on réalise cette série de prises de vue en cours de déplacement relatif entre le visage du porteur portant la monture et l'appareil de prise de vue afin de générer la prise de vue la plus fiable en correspondance d'une position franchie en cours de mouvement.

2. Procédé selon la revendication 1, **caractérisé en ce que** l'on met en oeuvre des moyens de traitement d'image aptes à identifier automatiquement la position des pupilles (200) du porteur sur une prise de vue.

3. Procédé selon la revendication précédente, **caractérisé en ce que** l'on met en oeuvre des moyens de traitement d'image qui incorporent des moyens de mesure automatique dudit au moins un paramètre physionomique (P₁,...,P₆).

4. Procédé selon l'une quelconque des revendications précédentes, **caractérisé en ce que** l'on identifie ladite prise de vue la mieux orientée à l'aide de moyens d'identification automatiques de celle-ci.

5. Dispositif de mesure d'au moins un paramètre physionomique (P₁,...,P₆) sur le visage d'un porteur d'une monture d'une paire de lunettes pour le montage adéquat de verres optiques sur cette monture, des moyens formant repères visuels étant disposés sur la monture,
comprenant des moyens pour réaliser une série de prise de vue sur le visage du porteur portant la monture en des positions différentes dont un appareil de prise de vue à cet effet, et des moyens pour permettre de sélectionner, parmi ces prises de vue, celle la mieux orientée pour la mesure du paramètre physionomique (P₁,...,P₆), **caractérisé en ce que** les moyens de prise de vue sont prévus pour réaliser la série de prise de vues en cours de mouvement relatif entre le visage et l'appareil de prise de vue, et générer ainsi la prise de vue la plus fiable en tant que position franchie en mouvement.

6. Dispositif selon la revendication 5, **caractérisé en ce qu'**il comprend des moyens de traitement d'image aptes à identifier par eux-mêmes la position des pupilles (200) du porteur sur une prise de vue.

7. Dispositif selon la revendication précédente, **caractérisé en ce que** les moyens de traitement d'image sont prévus pour mesurer automatiquement ledit au moins un paramètre physionomique (P₁,...,P₆) en référence à la position de la pupille (200) ainsi automatiquement identifiée.

8. Dispositif selon l'une quelconque des revendications précédentes, **caractérisé en ce qu'**il inclut des moyens aptes à identifier de manière automatique ladite prise de vue la mieux orientée.

9. Dispositif selon l'une quelconque des revendications 5 à 8, **caractérisé en ce qu'**il comprend un moyen d'affichage des prises de vue et une interface de contrôle permettant à l'utilisateur d'afficher image par image la série de prises de vue réalisées pendant le mouvement, afin de permettre à l'utilisateur de sélectionner lui-même celle des prises de vue qui est la mieux orientée.

10. Dispositif selon l'une quelconque des revendications 5 à 9, **caractérisé en ce qu'**il comprend des moyens pour générer un reflet cornéen à l'intérieur de la pupille (200) du porteur, en tant qu'aide à l'identification de la position de la pupille (200).

11. Dispositif selon l'une quelconque des revendications 5 à 10, **caractérisé en ce qu'**il comprend un miroir placé face au visage du porteur, ce miroir étant un miroir de type sans teint, et comprend une caméra cachée du regard du porteur derrière ce miroir.

12. Dispositif selon l'une quelconque des revendications 5 à 10, **caractérisé en ce qu'**il comprend un miroir, placé face au visage du porteur, le miroir étant muni d'un orifice, le dispositif comprenant en outre une caméra qui est positionnée de telle façon que son objectif prélève les images à travers cet orifice.

13. Dispositif selon l'une quelconque des revendications 5 à 12, **caractérisé en ce qu'**il comprend une caméra équipée des moyens de déplacement motorisés de cette caméra, pour un réglage en hauteur de celle-ci jusqu'à la hauteur des yeux du porteur.

14. Dispositif selon l'une quelconque des revendications 5 à 13, **caractérisé en ce qu'**il comprend une référence visuelle prévue pour être regardée par le porteur et des moyens de déplacement motorisés en hauteur de cette référence visuelle permettant de placer cette dernière à la hauteur des yeux du porteur.

15. Dispositif selon l'une quelconque des revendications 5 à 14, **caractérisé en ce qu'**il inclut des moyens pour équiper une monture, munis d'une série de repères visuels pour aider à l'identification de la position la mieux orientée de la monture.

16. Dispositif selon l'une quelconque des revendications 5 à 15, **caractérisé en ce qu'**il inclut des moyens pour équiper une monture, munis d'une série de repères visuels positionnés pour permettre le calcul d'une échelle de l'image par rapport à la taille réelle du visage du porteur.

## Patentansprüche

1. Verfahren zur Messung von zumindest einem physiognomischen Parameter (P₁, ..., P₆) unter den beiden Pupillenabständen links (P₂) und rechts (P₁), den beiden senkrechten Höhen zwischen dem tiefsten Punkt des Brillenrahmens und der linken Pupille (P₄) und der rechten (P₃), der Entfernung zwischen Glas und Auge (P₅), und dem Winkel und der Bügellänge (P₆) auf dem Gesicht eines Trägers eines Brillenrahmens einer Brille für die angemessene Montage von optischen Gläsern auf diesem Rahmen,
bei welchem Verfahren eine Reihe von Aufnahmen des Gesichts des Brillenträgers angefertigt wird, der den Rahmen in verschiedenen Stellungen trägt, und man unter diesen Aufnahmen die am besten ausgerichtete für die zuverlässigste Messung des betrachteten physiognomischen Parameters (P₁, ..., P₆) wählt, **dadurch gekennzeichnet, dass** diese Serie von Aufnahmen bei einer relativen Bewegung zwischen dem Gesicht des Trägers des Brillenrahmens und dem Aufnahmegerät ausgeführt wird, um die zuverlässigste Aufnahme entsprechend einer im Laufe der Bewegung durchlaufenen Position zu erzeugen.

2. Verfahren nach Anspruch 1, **dadurch gekennzeichnet, dass** Mittel zur Bildverarbeitung eingesetzt werden, die geeignet sind, automatisch die Position der Pupillen (200) des Trägers auf einer Aufnahme zu erkennen.

3. Verfahren nach vorstehendem Anspruch, **dadurch gekennzeichnet, dass** Mittel zur Bildverarbeitung eingesetzt werden, die Mittel zur automatischen Messung des besagten zumindest einen physiognomischen Parameters (P₁, ..., P₆) beinhalten.

4. Verfahren nach einem beliebigen der vorstehenden Ansprüche, **dadurch gekennzeichnet, dass** die am besten ausgerichtete Aufnahme mit Hilfe von automatischen Mitteln zur Erkennung derselben identifiziert wird.

5. Vorrichtung zur Messung von zumindest einem physiognomischen Parameter (P₁, ..., P₆) auf dem Gesicht eines Trägers eines Brillenrahmens einer Brille für die angemessene Montage von optischen Gläsern auf diesem Rahmen, wobei auf dem Rahmen visuelle Markierungen bildende Mittel angeordnet sind,
die Mittel zur Anfertigung einer Reihe von Aufnahmen auf dem Gesicht des Trägers umfasst, der den Brillenrahmen in verschiedenen Positionen trägt, darunter ein Aufnahmegerät hierfür, und Mittel zum Wählen unter diesen Aufnahmen der am besten ausgerichteten für die Messung des physiognomischen Parameters (P₁, ..., P₆), **dadurch gekennzeichnet, dass** die Aufnahmemittel dafür vorgesehen sind, die Serie von Aufnahmen bei einer relativen Bewegung zwischen dem Gesicht und dem Aufnahmegerät auszuführen, und somit die zuverlässigste Aufnahme als bei der Bewegung durchlaufene Position zu erzeugen.

6. Vorrichtung nach Anspruch 5, **dadurch gekennzeichnet, dass** Mittel zur Bildverarbeitung eingesetzt werden, die geeignet sind, alleine die Position der Pupillen (200) des Trägers auf einer Aufnahme zu erkennen.

7. Vorrichtung nach vorstehendem Anspruch, **dadurch gekennzeichnet, dass** die Bildverarbeitungsmittel vorgesehen sind, um automatisch den zumindest einen physiognomischen Parameter (P₁, ..., P₆) im Bezug zur somit automatisch erkannten Position der Pupille (200) zu messen.

8. Vorrichtung nach einem beliebigen der vorstehenden Ansprüche, **dadurch gekennzeichnet, dass** sie Mittel enthält, die geeignet sind, die am besten ausgerichtete Aufnahme automatisch zu identifizieren.

9. Vorrichtung nach einem beliebigen der vorstehenden Ansprüche 5 bis 8, **dadurch gekennzeichnet, dass** sie ein Anzeigemittel für die Aufnahmen und eine Steuerschnittstelle umfasst, die dem Benutzer ermöglicht, die Serie von bei der Bewegung angefertigten Aufnahmen als Einzelbilder anzuzeigen, um dem Benutzer zu erlauben, selbst diejenige der Aufnahmen zu wählen, die am besten ausgerichtet ist.

10. Vorrichtung nach einem beliebigen der vorstehenden Ansprüche 5 bis 9, **dadurch gekennzeichnet, dass** sie Mittel umfasst, einen Hornhautreflex im Innern der Pupille (200) des Trägers als Hilfe zur Identifizierung der Position der Pupille (200) zu erzeugen.

11. Vorrichtung nach einem beliebigen der vorstehenden Ansprüche 5 bis 10, **dadurch gekennzeichnet, dass** sie einen mit der Vorderseite zum Gesicht des Trägers platzierten Spiegel umfasst, wobei dieser Spiegel blind ist und eine vor dem Blick des Trägers hinter dem Spiegel verdeckte Kamera umfasst.

12. Vorrichtung nach einem beliebigen der vorstehenden Ansprüche 5 bis 10, **dadurch gekennzeichnet, dass** sie einen vor dem Gesicht des Trägers platzierten Spiegel umfasst, wobei der Spiegel mit einer Öffnung versehen ist, die Öffnung ferner eine Kamera umfasst, die so positioniert ist, dass ihr Objektiv die Bilder durch diese Öffnung hindurch aufnimmt.

13. Vorrichtung nach einem beliebigen der vorstehenden Ansprüche 5 bis 12, **dadurch gekennzeichnet, dass** sie eine Kamera umfasst, die mit Mitteln zur motorangetriebenen Verschiebung der Kamera für deren Höhenverschiebung bis zur Höhe der Augen des Trägers umfasst.

14. Vorrichtung nach einem beliebigen der vorstehenden Ansprüche 5 bis 13, **dadurch gekennzeichnet, dass** sie eine visuelle Referenz umfasst, die für die Betrachtung durch den Träger vorgesehen ist, und Mittel zur motorangetriebenen Verschiebung dieser visuellen Referenz, damit diese auf der Höhe der Augen des Trägers platziert werden kann.

15. Vorrichtung nach einem beliebigen der vorstehenden Ansprüche 5 bis 14, **dadurch gekennzeichnet, dass** sie Mittel zum Ausrüsten eines Rahmens umfasst, die mit einer Reihe von visuellen Markierungen versehen sind, um bei der Identifizierung der am besten ausgerichteten Position des Rahmens zu helfen.

16. Vorrichtung nach einem beliebigen der vorstehenden Ansprüche 5 bis 15, **dadurch gekennzeichnet, dass** sie Mittel zum Ausrüsten eines Rahmens umfasst, die mit einer Reihe von visuellen Markierungen versehen sind, die so positioniert sind, dass sie die Berechnung eines Bildmaßstabs im Verhältnis zur reellen Größe des Gesichts des Trägers ermöglichen.

## Claims

1. A method for measuring at least one physiognomic parameter (P₁, ..., P₆) from among both left (P₂) and right (P₁) pupil distances, both vertical heights between the lowest point of the frame and the pupil on the left (P₄), and on the right (P₃), the glass-eye distance (P₅) and the tilt angle (P₆) on the face of a wearer of a frame of a pair of spectacles for the adequate mounting of optical lenses on this frame,
in which method, a series of image shots of the face of the wearer of spectacles wearing the frame in different positions is achieved and the best oriented one is selected from these image shots, for a most reliable measurement of the relevant physiognomic parameter (P₁, ..., P₆), **characterized in that** this series of image shots is achieved during the relative displacement between the face of the wearer bearing the frame and the image capturing device in order to generate the most reliable image shot matching a reached position during the motion.

2. The method according to claim 1, **characterized in that** image processing means are applied, able to automatically identify the position of the pupils (200) of the wearer on an image shot.

3. The method according to the preceding claim, **characterized in that** image processing means are applied which incorporate means for automatically measuring said at least one physiognomic parameter (P₁, ..., P₆) .

4. The method according to any one of the preceding claims, **characterized in that** said best oriented image shot is identified using automatic identification means of the latter.

5. A device for measuring at least one physiognomic parameter (P₁, ..., P₆) on the face of a wearer of a frame of a pair of spectacles for adequate mounting of optical lenses on this frame, means forming visual markings being positioned on the frame,
comprising means for achieving a series of image shots on the face of the wearer bearing the frame in different positions including an image capturing device for this purpose, and means for allowing the selection from among these image shots, of the best oriented one for measuring the physiognomic parameter (P₁, ..., P₆), **characterized in that** the image capturing device is provided for achieving the series of image shots during the relative movement between the face and the image capturing device, and thereby generating the most reliable image shot as a position reached in motion.

6. The device according to claim 5, **characterized in that** it comprises image processing means able to identify by themselves the position of the pupils (200) of the wearer on an image shot.

7. The device according to the preceding claim, **characterized in that** the image processing means are provided for automatically measuring said at least one physiognomic parameter (P₁,...,P₆) with reference to the position of the thereby automatically identified pupil (200).

8. The device according to any one of the preceding claims, **characterized in that** it includes means able to automatically identify said best oriented image shot.

9. The device according to any one of claims 5 to 8, **characterized in that** it comprises a means for displaying the image shots and a control interface allowing the user to display image after image the series of achieved image shots during the motion, in order to allow the user to himself/herself select the one of the image shots which is the best oriented.

10. The device according to any one of claims 5 to 9, **characterized in that** it comprises means for generating a corneal reflection inside the pupil (200) of the wearer, as an aid for identifying the position of the pupil (200).

11. The device according to any one of claims 5 to 10, **characterized in that** it comprises a mirror placed facing the face of the wearer, this mirror being a one-way mirror, and comprises a image capturing device hidden from the view of the wearer behind this mirror.

12. The device according to any one of claims 5 to 10, **characterized in that** it comprises a mirror placed facing the face of the wearer, the mirror being provided with an orifice, the device further comprising a camera which is positioned in such a way that its objective samples the images through this orifice.

13. The device according to any one of claims 5 to 12, **characterized in that** it comprises a camera equipped with motor-driven displacement means of this image capturing device for adjusting the latter in height up to the height of eyes of the wearer.

14. The device according to any one of claims 5 to 13, **characterized in that** it comprises a visual reference provided to be looked at by the wearer and motor-driven means for displacing in height this visual reference giving the possibility of placing the latter at the height of the eyes of the wearer.

15. The device according to any one of claims 5 to 14, **characterized in that** it includes means for equipping a frame, provided with a series of visual markings for helping with the identification of the best oriented position of the frame.

16. The device according to any one of claims 5 to 15, **characterized in that** it includes means for equipping a frame, provided with a series of visual markings positioned for allowing calculation of a scale of the image relatively to the actual size of the face of the wearer.
